# EUROPEAN PATENT SPECIFICATION

(11) **EP 2 765 483 B1**
(45) Date of publication and mention of the grant of the patent: **13.09.2017**
(21) Application number: 13786405.4
(22) Date of filing: 04.07.2013
(51) Int. Cl.: G06F 1/32, H04W 52/02, G06F 1/30, H04W 84/02, G06F 1/24

(54) **METHOD AND DEVICE FOR CONTROLLING SHUTDOWN OF TERMINAL**
VERFAHREN UND VORRICHTUNG ZUR STEUERUNG DER ABSCHALTUNG EINES ENDGERÄTS
PROCÉDÉ ET DISPOSITIF DE COMMANDE D'ARRÊT DE TERMINAL

(30) Priority: 06.12.2012 CN 201210518121
(43) Date of publication of application: 13.08.2014
(73) Proprietor: Huawei Device Co., Ltd., Shenzhen, Guangdong 518129 (CN)
(72) Inventor: ZHANG, Kaibing, Shenzhen, Guangdong 518129 (CN); ZHU, Guangze, Shenzhen, Guangdong 518129 (CN); SHUI, Xinchao, Shenzhen, Guangdong 518129 (CN); SUN, Zehui, Shenzhen, Guangdong 518129 (CN); ZHAO, Xuewen, Shenzhen, Guangdong 518129 (CN)
(74) Representative: Pfenning, Meinig & Partner mbB
(86) International application number: PCT/CN2013/078784
(87) International publication number: WO 2014/086139

(56) References cited:
- EP-A1- 1 289 325
- EP-A1- 2 200 378
- CN-A- 101 931 699
- CN-A- 102 404 640
- US-A- 5 905 964
- US-A1- 2009 290 561
- US-A1- 2010 297 967

## Description

### TECHNICAL FIELD

The present invention relates to the field of communications technologies, and in particular to a method and an apparatus for controlling power-off of a terminal.

### BACKGROUND

Currently, there are many terminals where a battery is not separated from a body, for example, wireless battery-powered router-type terminals and portable mobile terminals; during packaging and transportation, these terminals may be powered on due to accidental triggering of a power switch, in which case the power-on is called abnormal power-on because a user may not want to use the terminal at that time. When a terminal is powered on abnormally, the battery capacity inside the terminal is consumed; consequently, when a user uses the terminal upon normal power-on, the terminal may not be powered on for use due to low battery capacity or no battery capacity. For example, if the terminal is powered on abnormally during transportation, when a terminal arrives at an operator's warehouse for number allocation, the terminal may not be powered on for the first time due to rather low battery capacity during number allocation.

European patent application EP 1289325 A1 discloses a mobile communications device which detects that its power is connected. If no SIM card is inserted in the device, a timer is started. After the expiry of a preset time period, then, if no emergency call is in progress and no digits have been dialed, the power supply is disconnected.

American patent application US 20090290561 A1 discloses a base station which is controlled inactively provided that no radio signal is received from a mobile terminal in the radio range thereof while radio signals can still be receive from mobile terminals. An inactively controlled base station is once again controlled actively when a radio signal of at least one mobile terminal is received. The radio range, of the base station, is deactivated while radio signals can be received from the mobile terminal when the base station is controlled inactively. Thus, the number of actively controlled base station may be minimized and the environmental impact of radio signals caused by the base stations reduced.

American patent application US 20100297967 A1 discloses a mobile phone including an antenna,an FM transmitter which outputs signals for transmitting radio waves from the antenna, an earphone terminal, a USB terminal, a charging terminal to each of which an external device may be connected, and a connection detecting portion which detects whether an external device is connected to any of the earphone terminal, the USB terminal, and the charging terminal. The FM transmitter controls transmission power of the radio waves in accordance with a status of connection with an external device (YES or NO) which is detected by the connection detecting portion.

European patent application EP 2200378 A1 discloses a network node which contains the following elements: at least two communication devices, a device for activity analysis (SEA) which are associated with at least two communication devices, a selection memory for storing type data, and a switching device which is adapted to disable at least one of the communication devices temporarily

### SUMMARY

Embodiments of the present invention provide a method and an apparatus for controlling power-off of a terminal to solve the problem in the prior art that the terminal may not be powered on for the first time due to consumption of battery capacity by abnormal power-on.

To solve the foregoing problem, the embodiments of the present invention provide the following technical solutions:

In a first aspect, a method for controlling power-off of a terminal is provided, including:
acquiring usage state information of the terminal after the terminal is powered on; and
controlling the terminal to power off if it is determined, according to the acquired usage state information of the terminal, that the terminal is abnormally powered on due to accidental triggering of a power switch, wherein the usage state information includes at least one of usage state information of the number of Wi-Fi users identifying whether there is Wi-Fi user accessing, usage state information of the number of users accessing through Bluetooth identifying whether there is Bluetooth user accessing, usage state information of USB interface identifying whether a device is connected to a USB interface of the terminal and usage state information of the charger identifying whether a charger is connected to a charger interface of the terminal.

In combination with the first aspect, in a first possible implementation of the first aspect,
the usage state information of the terminal includes the usage state information of the number of Wireless Fidelity Wi-Fi users; and
the determining, according to the acquired usage state information of the terminal, that the terminal is abnormally powered on includes:
determining that the terminal is abnormally powered on if the usage state information of the number of Wi-Fi users indicates that no Wi-Fi user accesses the terminal.

In combination with the first aspect, the first possible implementation of the first aspect, , in a second possible implementation of the first aspect,
the usage state information of the terminal includes usage state information of the number of users accessing through Bluetooth; and
the determining, according to the acquired usage state information of the terminal, that the terminal is abnormally powered on includes:
determining that the terminal is abnormally powered on if the usage state information of the number of users accessing through Bluetooth indicates that no Bluetooth user accesses the terminal.

In combination with the first aspect, the first possible implementation of the first aspect, or the second possible implementation of the first aspect, in a third possible implementation of the first aspect,
the usage state information of the terminal includes usage state information of a Universal Serial Bus USB interface; and
the determining, according to the acquired usage state information of the terminal, that the terminal is abnormally powered on includes:
determining that the terminal is abnormally powered on if the usage state information of the USB interface indicates that no device is connected to the USB interface of the terminal.

In combination with the first aspect, the first possible implementation of the first aspect, the second possible implementation of the first aspect, or the third possible implementation of the first aspect, in a fourth possible implementation of the first aspect,
the usage state information of the terminal includes usage state information of a charger; and
the determining, according to the acquired usage state information of the terminal, that the terminal is abnormally powered on includes:
determining that the terminal is abnormally powered on if the usage state information of the charger indicates that no charger is connected to a charger interface of the terminal.

In combination with the first aspect, the first possible implementation of the first aspect, the second possible implementation of the first aspect, the third possible implementation of the first aspect, or the fourth possible implementation of the first aspect, , in a fifth possible implementation of the first aspect, after power-on of the terminal and before acquiring the usage state information of the terminal, starting a timer is further included; and
specifically, the controlling the terminal to power off is: controlling the terminal to power off after the timer reaches a preset timing period.

In combination with the fifth possible implementation of the first aspect, in a sixth possible implementation of the first aspect, if it is determined, according to the acquired usage state information of the terminal, that the terminal is not abnormally powered on, the timer is stopped.

In a second aspect, an apparatus for controlling power-off of a terminal is provided, including:
an acquiring unit, configured to acquire usage state information of the terminal after the terminal is powered on;
a detecting unit, configured to determine, according to the usage state information of the terminal acquired by the acquiring unit, that the terminal is abnormally powered on due to accidental triggering of a power switch; and
a control unit, configured to control the terminal to power off when the detecting unit determines that the terminal is abnormally powered on, wherein the usage state information includes at least one of usage state information of the number of Wi-Fi users identifying whether there is Wi-Fi user accessing, usage state information of the number of users accessing through Bluetooth identifying whether there is Bluetooth user accessing, usage state information of USB interface identifying whether a device is connected to a USB interface of the terminal and usage state information of the charger identifying whether a charger is connected to a charger interface of the terminal.

In combination with the second aspect, in a first possible implementation of the second aspect,
the acquiring unit is specifically configured to acquire usage state information of the number of Wi-Fi users of the terminal; and
the detecting unit is specifically configured to determine that the terminal is abnormally powered on when the usage state information of the number of Wi-Fi users indicates that no Wi-Fi user accesses the terminal.

In combination with the second aspect, the first possible implementation of the second aspect, in a second possible implementation of the second aspect,
the acquiring unit is specifically configured to acquire usage state information of the number of users accessing through Bluetooth of the terminal; and
the detecting unit is specifically configured to determine that the terminal is abnormally powered on when the usage state information of the number of users accessing through Bluetooth indicates that no Bluetooth user accesses the terminal.

In combination with the second aspect, the first possible implementation of the second aspect, or the second possible implementation of the second aspect, in a third possible implementation of the second aspect,
the acquiring unit is specifically configured to acquire usage state information of a USB interface of the terminal; and
the detecting unit is specifically configured to determine that the terminal is abnormally powered on when the usage state information of the USB interface indicates that no device is connected to the USB interface of the terminal.

In combination with the second aspect, the first possible implementation of the second aspect, the second possible implementation of the second aspect, or the third possible implementation of the second aspect, in a fourth possible implementation of the second aspect,
the acquiring unit is specifically configured to acquire usage state information of a charger of the terminal; and
the detecting unit is specifically configured to determine that the terminal is abnormally powered on when the usage state information of the charger indicates that no charger is connected to a charger interface of the terminal.

In combination with the second aspect, the first possible implementation of the second aspect, the second possible implementation of the second aspect, the third possible implementation of the second aspect, or the fourth possible implementation of the second aspect, in a fifth possible implementation of the second aspect, the apparatus further includes:
a timing unit, configured to start a timer before the acquiring unit acquires the usage state information of the terminal;
the control unit is specifically configured to control the terminal to power off after the timer started by the starting unit reaches a preset timing period; and
the timing unit is further configured to stop the timer when the detecting unit determines that the terminal is not powered on abnormally.

In the method for controlling power-off of a terminal provided by the embodiments of the present invention, a terminal, after being powered on, is not always in a power-on state. Rather, it is first detected whether the terminal is abnormally powered on; therefore, when the terminal is powered on due to accidental triggering of a power switch during packaging and transportation of the terminal, the abnormal power-on of the terminal may be detected, and the terminal is controlled to power off, sparing the battery capacity which would otherwise be consumed due to abnormal power-on, ensuring that the battery capacity of the terminal satisfies the need for a first power-on, and increasing a success rate of the first power-on.

### BRIEF DESCRIPTION OF DRAWINGS

To describe the technical solutions in the embodiments of the present invention or in the prior art more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic flowchart of a method for controlling power-off of a terminal according to an embodiment of the present invention;
FIG. 2 is a schematic flowchart of a method for controlling power-off of a terminal according to another embodiment of the present invention;
FIG. 3 is a schematic flowchart of a method for controlling power-off of a terminal according to another embodiment of the present invention;
FIG. 4 is a schematic structural diagram of a terminal on which the method embodiment shown in FIG. 3 is based;
FIG. 5 is a schematic structural diagram of an apparatus for controlling power-off of a terminal according to an embodiment of the present invention; and
FIG. 6 is a schematic structural diagram of an apparatus for controlling power-off of a terminal according to another embodiment of the present invention.

### DESCRIPTION OF EMBODIMENTS

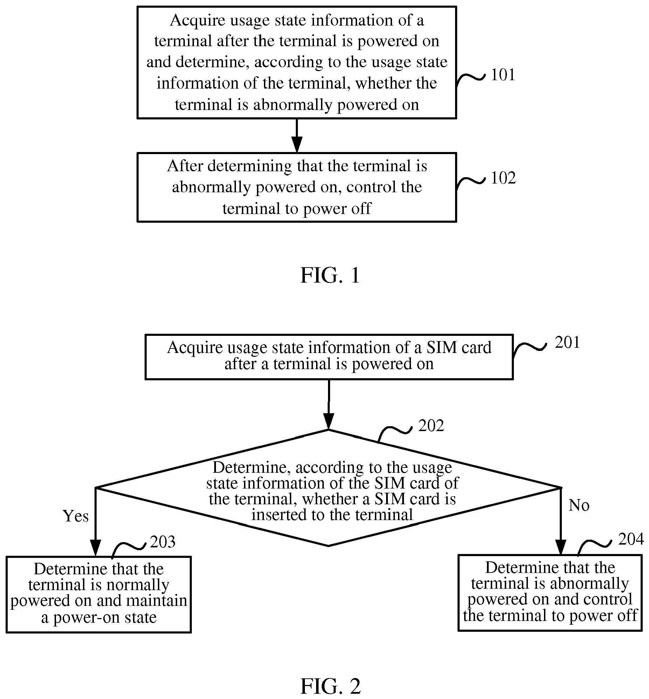

FIG. 1 shows an embodiment of a method for controlling power-off of a terminal in the present invention, where the specific processing procedure is as follows:

Step 101: Acquire usage state information of a terminal after the terminal is powered on and determine, according to the usage state information of the terminal, whether the terminal is abnormally powered on.

In this embodiment of the present invention, the terminal may be a wireless battery-powered router-type terminal, or another type of terminal where a battery is not separated from a body, for example, a portable mobile terminal such as a mobile phone or a tablet computer.

To detect whether a terminal is abnormally powered on, the usage state information of the terminal may be acquired first; when the usage state information is consistent with preset information about abnormal power-on, it is determined that the terminal is abnormally powered on.

Because the usage state information of the terminal that can be acquired includes multiple types of information, either one type of the usage state information or multiple types of the usage state information may be acquired to detect whether the terminal is abnormally powered on. For the purpose of quickly detecting abnormal power-on of the terminal, only one type of the usage state information may be acquired. For example, only usage state information of a subscriber identity module (SIM, Subscriber Identity Module) is acquired, where the usage state information of the SIM card is used to identify whether a SIM card is inserted to the terminal; when the usage state information of the SIM card is consistent with the abnormal power-on information indicating that no SIM card is inserted to the terminal, it is determined that the terminal is abnormally powered on. For the purpose of improving accuracy in detecting abnormal power-on of the terminal, multiple types of the usage state information may be acquired. For example, in addition to the usage state information of the SIM card, at least one of the following types of information may be acquired: usage state information of the number of Wireless Fidelity (Wi-Fi, Wireless Fidelity) users, where the usage state information of the number of Wi-Fi users is used to identify whether there are Wi-Fi users accessing; usage state information of the number of users accessing through Bluetooth, where the usage state information of the number of users accessing through Bluetooth is used to identify whether there are Bluetooth users accessing; usage state information of a Universal Serial Bus (USB, Universal Serial Bus) interface, where the usage state information of the USB interface is used to identify whether a device is connected to a USB interface of the terminal; and usage state information of a charger, where the usage state information of the charger is used to identify whether a charger is connected to a charger interface of the terminal.

When the acquired usage state information of the terminal further includes the usage state information of the number of Wi-Fi users, consistency between the usage state information and the preset abnormal power-on information further includes consistency between the usage state information of the number of Wi-Fi users and abnormal power-on information indicating that no Wi-Fi user accesses the terminal; when the usage state information further includes the usage state information of the number of users accessing through Bluetooth, consistency between the usage state information and the preset abnormal power-on information further includes consistency between the usage state information of the number of users accessing through Bluetooth and abnormal power-on information indicating that no Bluetooth user accesses the terminal; when the usage state information further includes the usage state information of the USB interface, consistency between the usage state information and the preset abnormal power-on information further includes consistency between the usage state information of the USB interface and abnormal power-on information indicating that no device is connected to a USB interface of the terminal; and when the usage state information further includes the usage state information of the charger, consistency between the usage state information and the preset abnormal power-on information further includes consistency between the usage state information of the charger and abnormal power-on information indicating that no charger is connected to a charger interface of the terminal.

In addition, to avoid a long detection time for detecting whether a terminal is abnormally powered on, a preset time segment may be set so that the detection procedure is performed within the preset time segment. The time segment may be set with reference to a service duration and a waiting time of the terminal, and the length of the time segment is not limited in this embodiment of the present invention. The preset time segment may be implemented by configuring the timing period of the timer. Accordingly, the detection procedure may include: starting the timer after the terminal is powered on, and detecting, within the timing period of the timer, whether the terminal is abnormally powered on.

Step 102: After determining that the terminal is abnormally powered on, control the terminal to power off.

If the terminal is powered on, a timer is started, and it is detected whether the terminal is abnormally powered on; when it is detected that the terminal is abnormally powered on and after the preset timing period expires, the terminal is controlled to power off. In addition, within the timing period, if it is detected that the terminal is normally powered on, the detection procedure is ended in advance, that is, the timer is stopped.

As can be seen from above, in the method for controlling power-off of a terminal provided by this embodiment of the present invention, a terminal, after being powered on, is not always in a power-on state. Rather, it is first detected whether the terminal is abnormally powered on; therefore, when the terminal is powered on due to accidental triggering of a power switch during packaging and transportation of the terminal, the abnormal power-on of the terminal may be detected, and the terminal is controlled to power off, sparing the battery capacity which would otherwise be consumed due to abnormal power-on, ensuring that the battery capacity of the terminal satisfies the need for a first power-on, and increasing a success rate of the first power-on.

FIG. 2 shows another embodiment of the present invention of a method for controlling power-off of a terminal, where abnormal power-on of a terminal is detected by acquiring usage state information of a SIM card of the terminal. The specific procedure is as follows:

Step 201: Acquire the usage state information of the SIM card after the terminal is powered on.

A terminal that is normally powered on generally has a SIM card inserted to the terminal; therefore the usage state information of the SIM card may be acquired, where the usage state information of the SIM card is used to identify whether a SIM card is inserted to the terminal, so that it can be determined, according to the acquired usage state information of the SIM card, whether the terminal is abnormally powered on.

Step 202: Determine, according to the usage state information of the SIM card of the terminal, whether a SIM card is inserted to the terminal; if yes, go to step 203, if no, go to step 204.

The correspondence between the usage state information of the SIM card and identified usage states of the SIM card may be as shown in Table 1.

**Table 1**

| Usage State Information of SIM Card | Usage State of SIM Cad |
|---|---|
| 0 | SIM card inserted |
| 1 | No SIM card inserted |

As can be seen from Table 1, the value 0 of the usage state information of the SIM card indicates that the SIM card is inserted, and the value 1 of the usage state information of the SIM card indicates that no SIM card is inserted.

Step 203: Determine that the terminal is normally powered on and maintain a power-on state.

Step 204: Determine that the terminal is abnormally powered on and control the terminal to power off.

In this embodiment of the present invention, when the timer is started, the usage state information of the SIM card may be acquired periodically within the timing period; when the usage state information of the SIM card acquired within the timing period indicates that no SIM is inserted, it is determined that the terminal is abnormally powered on.

As can be seen from above, the method for controlling power-off of a terminal provided by this embodiment of the present invention may not only ensure sufficient battery capacity for first power-on, thereby enhancing the success rate of the first power-on of the terminal, but also detect abnormal power-on by acquiring the usage state information of the SIM card, with a simple and efficient detection procedure.

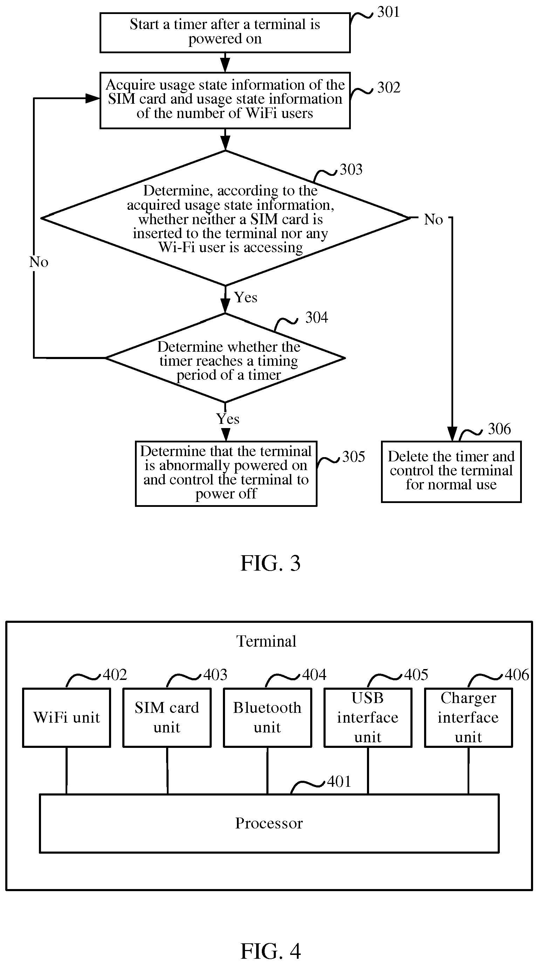

FIG. 3 shows another embodiment of a method for controlling power-off of a terminal in the present invention. In this embodiment, the terminal is a wireless battery-powered router-type terminal; detection of whether the terminal is abnormally powered on is performed within a timing period of a timer; and, during the detection of whether the terminal is abnormally powered on, usage state information of the terminal, including usage state information of a SIM card and usage state information of the number of Wi-Fi users, is acquired. The embodiment is described in detail as follows:
Step 301: Start a timer after the terminal is powered on.

Specifically, the timer may be started during initialization after the terminal is powered on.

In this embodiment, a timing period of the timer may be pre-configured as needed. For example, the foregoing timing period may be pre-configured with reference to service duration and waiting time of the terminal. A length of the timing period is not limited in the present invention; for example, the timing period may be pre-configured to 1, 2, or 3 minutes.

Step 302: Acquire the usage state information of the SIM card and the usage state information of the number of Wi-Fi users.

The value 0 of the usage state information of the SIM card may be used to indicate that the SIM card is inserted; and the value 1 of the usage state information of the SIM card may be used to indicate that no SIM card is inserted. The value 0 of the usage state information of the number of Wi-Fi users may be used to indicate that no Wi-Fi user is accessing; and the value 1 of the usage state information of the number of Wi-Fi users may be used to indicate that a Wi-Fi user is accessing.

It should be noted that during the detection of whether the terminal is abnormally powered on, the usage state information acquired may include multiple types of information, which is not limited to the usage state information of the SIM card and the usage state information of the number of Wi-Fi users, but may include the usage state information of the SIM card and at least one type of the following usage state information: usage state information of the number of Wi-Fi users, usage state information of the number of users accessing through Bluetooth, usage state information of the USB interface, and usage state information of a charger. In this embodiment, a combination of the usage state information for detecting whether the terminal is abnormally powered on is not limited.

Step 303: Determine, according to the acquired usage state information, whether neither a SIM card is inserted to the terminal nor any Wi-Fi user is accessing; and if yes, go to step 304, or, if no, go to step 306.

Step 304: Determine whether the timer expires; and if yes, go to step 305, or, if no, go to step 302.

Step 305: Determine that the terminal is abnormally powered on and control the terminal to power off.

After the terminal is controlled to power off, it is equivalent to that the battery inside the battery stops power supply, thereby saving the battery capacity.

Step 306: Delete the timer and control the terminal for normal use.

As can be seen from above, the method for controlling power-off of a terminal provided by this embodiment of the present invention may not only ensure sufficient battery capacity for a requirement of first power-on, thereby enhancing the success rate of the first power-on of the terminal, but also detect whether the terminal is abnormally powered on by acquiring the usage state parameter of the SIM card of the terminal and the usage state parameter of the number of Wi-Fi users, further enhancing the accuracy in detecting whether the terminal is abnormally powered on, thereby enhancing the accuracy in controlling the terminal power-off.

FIG. 4 is a schematic structural diagram according to an embodiment of the present invention, where the terminal includes a processor 401, a Wi-Fi unit 402, a SIM card unit 403, a Bluetooth unit 404, a USB interface unit 405, and a charger interface unit 406; a method for controlling power-off of a terminal may be implemented based on the foregoing physical components of the terminal.

The Wi-Fi unit 402 is configured to implement Wi-Fi user access, change usage state information of the number of Wi-Fi users when detecting that a Wi-Fi user is accessing (for example, using 0 to indicate that no Wi-Fi user is accessing and using 1 to indicate that a Wi-Fi user is accessing), and report the usage state information of the number of Wi-Fi users to the processor 401, namely, to report event processing of the usage state information of the number of Wi-Fi users to the processor 401 after adding a change of the number of Wi-Fi users.

The SIM card unit 403 is configured to implement an interaction between the terminal and the SIM card, read and report the SIM card information to the terminal, change usage state information of the SIM card upon detecting that an SIM card is inserted to the terminal (for example, using 0 to indicate that no SIM card is available and using 1 to indicate that a SIM card is available), and report the usage state information of the SIM card to the processor 401, namely, to report event processing of the usage state information of the SIM card to the processor 401 after adding a SIM card inserted to the terminal.

The Bluetooth unit 404 is configured to implement a Bluetooth connection between the terminal and another device, change usage state information of the number of users accessing through Bluetooth after detecting that a Bluetooth user is accessing (for example, using 0 to indicate no Bluetooth user is accessing and using 1 to indicate that a Bluetooth user is accessing), and report the usage state information of the number of users accessing through Bluetooth to the processor 401, namely, to report event processing of the usage state information of the number of Bluetooth users to the processor 401 after adding a change of the number of Bluetooth users.

The USB interface unit 405 is configured to implement a USB interface function, transfer data through the USB, change usage state information of the USB interface when detecting that a device is connected to the USB interface (for example, using 0 to indicate that no device is connected to the USB interface and using 1 to indicate that a device is connected to the USB interface), and report the usage state information of the USB interface to the processor 401, namely, to report event processing of the usage state information of the USB interface to the processor 401 after adding a device connected to the USB interface.

The charger interface unit 406 is configured to detect whether a charger is connected to the terminal to implement a charging function, change usage state information of the charger when detecting that a charger is connected to the charger interface (for example, using 0 to indicate that no charger is connected to the charger interface and using 1 to indicate that a charger is connected to the charger interface), and report the usage state information of the charger interface to the processor 401, namely, to report event processing of the usage state information of the charger interface to the processor 401 after adding a charger connected to the charger interface.

The processor 401 is configured to specifically execute the method for controlling power-off of a terminal, start a timer during initialization of the processor 401, acquire usage state information from the Wi-Fi unit 402, the SIM card unit 403, the Bluetooth unit 404, the USB interface unit 405, and the charger interface unit 406 within a timing period of the timer, delete the timer started during initialization when detecting, according to the usage state information, that the terminal is normally powered on, and otherwise control the terminal to power off after the timer reaches the timing period.

Corresponding to this embodiment of a method for controlling power-off of a terminal in the present invention, the present invention further provides an embodiment of an apparatus for controlling power-off of a terminal.

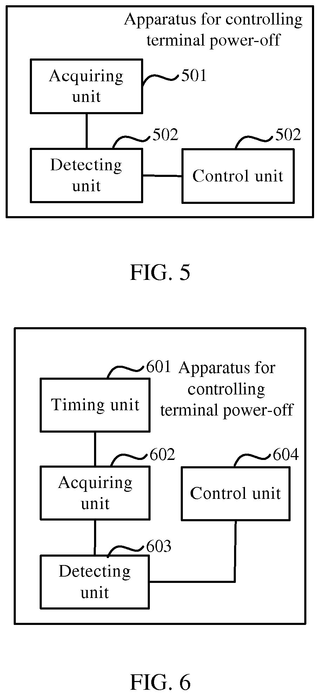

FIG. 5 shows an apparatus for controlling power-off of a terminal according to an embodiment of the present invention, where the apparatus includes:
an acquiring unit 501, configured to acquire usage state information of the terminal after the terminal is powered on;
a detecting unit 502, configured to determine, according to the usage state information of the terminal acquired by the acquiring unit 501, that the terminal is abnormally powered on; and
a control unit 503, configured to control the terminal to power off when the detecting unit 502 determines that the terminal is abnormally powered on.

In a specific implementation:
the acquiring unit 501 is specifically configured to acquire usage state information of the SIM card of the terminal; and
the detecting unit 502 is specifically configured to determine that the terminal is abnormally powered on when the usage state information of the SIM card indicates that no SIM card is inserted to the terminal.

In another specific implementation:
the acquiring unit 501 is specifically configured to acquire usage state information of the number of Wi-Fi users of the terminal; and
the detecting unit 502 is specifically configured to determine that the terminal is abnormally powered on when the usage state information of the number of Wi-Fi users indicates that no Wi-Fi user accesses the terminal.

In another specific implementation:
the acquiring unit 501 is specifically configured to acquire usage state information of the number of users accessing through Bluetooth of the terminal; and
the detecting unit 502 is specifically configured to determine that the terminal is abnormally powered on when the usage state information of the number of users accessing through Bluetooth indicates that no Bluetooth user accesses the terminal.

In another specific implementation:
the acquiring unit 501 is specifically configured to acquire usage state information of a USB interface of the terminal; and
the detecting unit 502 is specifically configured to determine that the terminal is abnormally powered on when the usage state information of the USB interface indicates that no device is connected to the USB interface of the terminal.

In another specific implementation:
the acquiring unit 501 is specifically configured to acquire usage state information of a charger of the terminal; and
the detecting unit 502 is specifically configured to determine that the terminal is abnormally powered on when the usage state information of the charger indicates that no charger is connected to a charger interface of the terminal.

It should be noted that the foregoing specific implementations may be combined; for example, the acquiring unit 501 may acquire the usage state information of the SIM card and the usage state information of the number of Wi-Fi users, and the detecting unit 502 determines that the terminal is abnormally powered on when the usage state information of the SIM card indicates that no SIM card is inserted to the terminal and the usage state information of the number of Wi-Fi users indicates that no Wi-Fi user accesses the terminal.

As can be seen from above, when the apparatus for controlling power-off of a terminal provided by this embodiment of the present invention is used, a terminal, after being powered on, is not always in a power-on state. Rather, the detecting unit 501 first detects whether the terminal is abnormally powered on; therefore, when the terminal is powered on due to accidental triggering of a power switch during packaging and transportation of the terminal, the abnormal power-on of the terminal may be detected. Then, when the detecting unit 501 detects that the terminal is abnormally powered on, the control unit 502 controls the terminal to power off, sparing the battery capacity of the terminal and therefore ensuring that the battery capacity of the terminal satisfies the need for a first power-on, and increasing a success rate of the first power-on.

FIG. 6 shows an apparatus for controlling power-off of a terminal according to another embodiment of the present invention, where the apparatus includes:
a timing unit 601, configured to start a timer after the terminal is powered on;
an acquiring unit 602, configured to acquire usage state information of the terminal after the timing unit 601 starts a timer;
a detecting unit 603, configured to determine, according to the usage state information of the terminal acquired by the acquiring unit 602, that the terminal is abnormally powered on; and
a control unit 604, configured to control the terminal to power off when the detecting unit 603 detects that the terminal is abnormally powered on and after the timer started by the timing unit 601 reaches a preset timing period.
the timing unit 601 is further configured to stop the timer when the detecting unit 603 determines that the terminal is not abnormally powered on.

In a specific implementation:
the acquiring unit 602 is specifically configured to acquire usage state information of the SIM card of the terminal; and
the detecting unit 603 is specifically configured to determine that the terminal is abnormally powered on when the usage state information of the SIM card indicates that no SIM card is inserted to the terminal.

In another specific implementation:
the acquiring unit 602 is specifically configured to acquire usage state information of the number of Wi-Fi users of the terminal; and
the detecting unit 603 is specifically configured to determine that the terminal is abnormally powered on when the usage state information of the number of Wi-Fi users indicates that no Wi-Fi user accesses the terminal.

In another specific implementation:
the acquiring unit 602 is specifically configured to acquire usage state information of the number of users accessing through Bluetooth of the terminal; and
the detecting unit 603 is specifically configured to determine that the terminal is abnormally powered on when the usage state information of the number of users accessing through Bluetooth indicates that no Bluetooth user accesses the terminal.

In another specific implementation:
the acquiring unit 602 is specifically configured to acquire usage state information of a USB interface of the terminal; and
the detecting unit 603 is specifically configured to determine that the terminal is abnormally powered on when the usage state information of the USB interface indicates that no device is connected to the USB interface of the terminal.

In another specific implementation:
the acquiring unit 602 is specifically configured to acquire usage state information of a charger of the terminal; and
the detecting unit 603 is specifically configured to determine that the terminal is abnormally powered on when the usage state information of the charger indicates that no charger is connected to the charger interface of the terminal.

It should be noted that the foregoing specific implementations may be combined; for example, the acquiring unit 602 may acquire the usage state information of the SIM card and the usage state information of the number of Wi-Fi users, and the detecting unit 603 determines that the terminal is abnormally powered on when the usage state information of the SIM card indicates that no SIM card is inserted to the terminal and the usage state information of the number of Wi-Fi users indicates that no Wi-Fi user accesses the terminal.

According to the foregoing embodiment, a terminal, after being powered on, is not always in a power-on state. Rather, it is first detected whether the terminal is abnormally powered on; therefore, when the terminal is powered on due to accidental triggering of a power switch during packaging and transportation of the terminal, the abnormal power-on of the terminal may be detected, and the terminal is controlled to power off, sparing the battery capacity which would otherwise be consumed due to abnormal power-on, ensuring that the battery capacity of the terminal satisfies the need for a first power-on, and increasing a success rate of the first power-on.

A person skilled in the art may be further aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solution. A person skilled in the art may use different methods to implement the described functions for each particular application, but it should not be considered that the implementation goes beyond the scope of the present invention.

In combination with the embodiments herein, steps of the method or algorithm described may be directly implemented by using hardware, a software module executed by a processor, or the combination thereof.

The foregoing descriptions of the disclosed embodiments allow a person skilled in the art to implement or use the present invention. Multiple modifications to these embodiments are apparent for a person skilled in the art. A general principle defined in the present invention may be implemented in other embodiments without departing from the scope of the present invention. Therefore, the present invention will not be limited to the embodiments described in this specification but extends to a widest scope that complies with the principle and novelty disclosed in this specification.

## Claims

1. A method for controlling power-off of a terminal, comprising:
acquiring (101) usage state information of the terminal after the terminal is powered on; and
controlling (102) the terminal to power off if it is determined, according to the acquired usage state information of the terminal, that the terminal is abnormally powered on due to accidental triggering of a power switch, wherein the usage state information includes at least one of usage state information of the number of Wireless Fidelity, Wi-Fi, users used to identify whether there is Wi-Fi user accessing, usage state information of the number of users accessing through Bluetooth used to identify whether there is a Bluetooth user accessing, usage state information of USB interface used to identify whether a device is connected to a USB interface of the terminal and usage state information of the charger used to identify whether a charger is connected to a charger interface of the terminal.

2. The method according to claim 1, wherein:
the usage state information of the terminal comprises usage state information of the number of Wireless Fidelity Wi-Fi users; and
the determining, according to the acquired usage state information of the terminal, that the terminal is abnormally powered on comprises:
determining that the terminal is abnormally powered on if the usage state information of the number of Wi-Fi users indicates that no Wi-Fi user accesses the terminal.

3. The method according to any one of claims 1 to 2, wherein:
the usage state information of the terminal comprises usage state information of the number of users accessing through Bluetooth; and
the determining, according to the acquired usage state information of the terminal, that the terminal is abnormally powered on comprises:
determining that the terminal is abnormally powered on if the usage state information of the number of users accessing through Bluetooth indicates that no Bluetooth user accesses the terminal.

4. The method according to any one of claims 1 to 3, wherein:
the usage state information of the terminal comprises usage state information of a Universal Serial Bus USB interface; and
the determining, according to the acquired usage state information of the terminal, that the terminal is abnormally powered on comprises:
determining that the terminal is abnormally powered on if the usage state information of the USB interface indicates that no device is connected to the USB interface of the terminal.

5. The method according to any one of claims 1 to 4, wherein:
the usage state information of the terminal comprises usage state information of a charger; and
the determining, according to the acquired usage state information of the terminal, that the terminal is abnormally powered on comprises:
determining that the terminal is abnormally powered on if the usage state information of the charger indicates that no charger is connected to a charger interface of the terminal.

6. The method according to any one of claims 1 to 5, further comprising starting a timer after the terminal is powered on and before acquiring the usage state information of the terminal, wherein:
specifically, the controlling the terminal to power off is: controlling the terminal to power off after the timer reaches a preset timing period.

7. The method according to claim 6, wherein the timer is stopped if it is determined, according to the acquired usage state information of the terminal, that the terminal is not abnormally powered on.

8. An apparatus for controlling power-off of a terminal, comprising:
an acquiring unit (501), configured to acquire usage state information of the terminal after the terminal is powered on;
a detecting unit (502), configured to determine, according to the usage state information of the terminal acquired by the acquiring unit, that the terminal is abnormally powered on due to accidental triggering of a power switch; and
a control unit (503), configured to control the terminal to power off when the detecting unit determines that the terminal is abnormally powered on, wherein the usage state information includes at least one of usage state information of the number of Wi-Fi users used to identify whether there is Wi-Fi user accessing, usage state information of the number of users accessing through Bluetooth used to identify whether there is Bluetooth user accessing, usage state information of USB interface used to identify whether a device is connected to a USB interface of the terminal and usage state information of the charger used to identify whether a charger is connected to a charger interface of the terminal.

9. The apparatus according to claim 8, wherein:
the acquiring unit is specifically configured to acquire usage state information of the number of Wi-Fi users of the terminal; and
the detecting unit is specifically configured to determine that the terminal is abnormally powered on when the usage state information of the number of Wi-Fi users indicates that no Wi-Fi user accesses the terminal.

10. The apparatus according to any one of claims 8 to 9, wherein:
the acquiring unit is specifically configured to acquire usage state information of the number of users accessing through Bluetooth of the terminal; and
the detecting unit is specifically configured to determine that the terminal is abnormally powered on when the usage state information of the number of users accessing through Bluetooth indicates that no Bluetooth user accesses the terminal.

11. The apparatus according to any one of claims 8 to 10, wherein:
the acquiring unit is specifically configured to acquire usage state information of a USB interface of the terminal; and
the detecting unit is specifically configured to determine that the terminal is abnormally powered on when the usage state information of the USB interface indicates that no device is connected to the USB interface of the terminal.

12. The apparatus according to any one of claims 8 to 11, wherein:
the acquiring unit is specifically configured to acquire usage state information of a charger of the terminal; and
the detecting unit is specifically configured to determine that the terminal is abnormally powered on when the usage state information of the charger indicates that no charger is connected to a charger interface of the terminal.

13. The apparatus according to any one of claims 8 to 12, further comprising:
a timing unit, configured to start a timer before the acquiring unit acquires the usage state information of the terminal;
the control unit is specifically configured to control the terminal to power off after the timer started by the timing unit reaches a preset timing period; and
the timing unit is further configured to stop the timer when the detecting unit determines that the terminal is not powered on abnormally.

14. A computer program product, comprising computer program code, which, when executed by a computer unit, will cause the computer unit to perform all the steps of claims 1 to 7.

## Patentansprüche

1. Verfahren zum Steuern einer Abschaltung eines Endgeräts, umfassend:
Erfassen (101) von Nutzungszustandsinformationen des Endgeräts, nachdem das Endgerät eingeschaltet wird; und
Steuern (102) des Endgeräts, so dass es sich abschaltet, falls gemäß den erfassten Nutzungszustandsinformationen des Endgeräts bestimmt wird, dass das Endgerät aufgrund eines versehentlichen Auslösens eines Stromversorgungsschalters anormal eingeschaltet wird, wobei die Nutzungszustandsinformationen Nutzungszustandsinformationen der Anzahl von "Wireless Fidelity"-Benutzern bzw. WiFi-Benutzern, die zum Identifizieren verwendet werden, ob ein WiFi-Benutzerzugriff vorhanden ist, und/oder Nutzungszustandsinformationen der Anzahl von über Bluetooth zugreifenden Benutzern, die zum Identifizieren verwendet werden, ob ein Bluetooth-Benutzerzugriff vorhanden ist, und/oder Nutzungszustandsinformationen einer USB-Schnittstelle, die zum Identifizieren verwendet werden, ob eine Einrichtung mit einer USB-Schnittstelle des Endgeräts verbunden ist, und/oder Nutzungszustandsinformationen des Ladegeräts, die zum Identifizieren verwendet werden, ob ein Ladegerät mit einer Ladegerät-Schnittstelle des Endgeräts verbunden ist, beinhalten.

2. Verfahren nach Anspruch 1, wobei:
die Nutzungszustandsinformationen des Endgeräts Nutzungszustandsinformationen der Anzahl von "Wireless Fidelity"-Benutzern bzw. WiFi-Benutzern umfassen und das Bestimmen gemäß den erfassten Nutzungszustandsinformationen des Endgeräts, dass das Endgerät anormal eingeschaltet wird, Folgendes umfasst:
Bestimmen, dass das Endgerät anormal eingeschaltet wird, falls die Nutzungszustandsinformationen der Anzahl von WiFi-Benutzern angeben, dass kein WiFi-Benutzer auf das Endgerät zugreift.

3. Verfahren nach einem der Ansprüche 1 bis 2, wobei:
die Nutzungszustandsinformationen des Endgeräts Nutzungszustandsinformationen der Anzahl von über Bluetooth zugreifenden Benutzern umfassen und
das Bestimmen gemäß den erfassten Nutzungszustandsinformationen des Endgeräts, dass das Endgerät anormal eingeschaltet wird, Folgendes umfasst:
Bestimmen, dass das Endgerät anormal eingeschaltet wird, falls die Nutzungszustandsinformationen der Anzahl von über Bluetooth zugreifenden Benutzern angeben, dass kein Bluetooth-Benutzer auf das Endgerät zugreift.

4. Verfahren nach einem der Ansprüche 1 bis 3, wobei:
die Nutzungszustandsinformationen des Endgeräts Nutzungszustandsinformationen einer "Universal Serial Bus"-Schnittstelle bzw. USB-Schnittstelle umfassen und
das Bestimmen gemäß den erfassten Nutzungszustandsinformationen des Endgeräts, dass das Endgerät anormal eingeschaltet wird, Folgendes umfasst:
Bestimmen, dass das Endgerät anormal eingeschaltet wird, falls die Nutzungszustandsinformationen der USB-Schnittstelle angeben, dass keine Einrichtung mit der USB-Schnittstelle des Endgeräts verbunden ist.

5. Verfahren nach einem der Ansprüche 1 bis 4, wobei:
die Nutzungszustandsinformationen des Endgeräts Nutzungszustandsinformationen eines Ladegeräts umfassen und
das Bestimmen gemäß den erfassten Nutzungszustandsinformationen des Endgeräts, dass das Endgerät anormal eingeschaltet wird, Folgendes umfasst:
Bestimmen, dass das Endgerät anormal eingeschaltet wird, falls die Nutzungszustandsinformationen des Ladegeräts angeben, dass kein Ladegerät mit einer Ladegerät-Schnittstelle des Endgeräts verbunden ist.

6. Verfahren nach einem der Ansprüche 1 bis 5, das ferner Starten eines Timers, nachdem das Endgerät eingeschaltet wird und bevor die Nutzungszustandsinformationen des Endgeräts erfasst werden, umfasst, wobei:
das Steuern des Endgeräts, so dass es sich abschaltet, spezifisch Steuern des Endgeräts, so dass es sich abschaltet, nachdem der Timer einen voreingestellten Timing-Zeitraum erreicht, beinhaltet.

7. Verfahren nach Anspruch 6, wobei der Timer angehalten wird, falls gemäß den erfassten Nutzungszustandsinformationen des Endgeräts bestimmt wird, dass das Endgerät nicht anormal eingeschaltet wird.

8. Vorrichtung zum Steuern eines Abschaltens eines Endgeräts, umfassend:
eine Erfassungseinheit (501), die dazu konfiguriert ist, Nutzungszustandsinformationen des Endgeräts zu erfassen, nachdem das Endgerät eingeschaltet wird;
eine Detektionseinheit (502), die dazu konfiguriert ist, gemäß den durch die Erfassungseinheit erfassten Nutzungszustandsinformationen des Endgeräts zu bestimmen, dass das Endgerät aufgrund eines versehentlichen Auslösens eines Stromversorgungsschalters anormal eingeschaltet wird; und
eine Steuereinheit (503), die dazu konfiguriert ist, das Endgerät zu steuern, so dass es sich abschaltet, wenn die Detektionseinheit bestimmt, dass das Endgerät anormal eingeschaltet wird, wobei die Nutzungszustandsinformationen Nutzungszustandsinformationen der Anzahl von WiFi-Benutzern, die zum Identifizieren verwendet werden, ob ein WiFi-Benutzerzugriff vorhanden ist, und/oder Nutzungszustandsinformationen der Anzahl von über Bluetooth zugreifenden Benutzern, die zum Identifizieren verwendet werden, ob ein Bluetooth-Benutzerzugriff vorhanden ist, und/oder Nutzungszustandsinformationen einer USB-Schnittstelle, die zum Identifizieren verwendet werden, ob eine Einrichtung mit einer USB-Schnittstelle des Endgeräts verbunden ist, und/oder Nutzungszustandsinformationen des Ladegeräts, die zum Identifizieren verwendet werden, ob ein Ladegerät mit einer Ladegerät-Schnittstelle des Endgeräts verbunden ist, beinhalten.

9. Vorrichtung nach Anspruch 8, wobei:
die Erfassungseinheit spezifisch dazu konfiguriert ist, Nutzungszustandsinformationen der Anzahl von WiFi-Benutzern des Endgeräts zu erfassen; und
die Detektionseinheit spezifisch dazu konfiguriert ist, zu bestimmen, dass das Endgerät anormal eingeschaltet wird, wenn die Nutzungszustandsinformationen der Anzahl von WiFi-Benutzern angeben, dass kein WiFi-Benutzer auf das Endgerät zugreift.

10. Vorrichtung nach einem der Ansprüche 8 bis 9, wobei:
die Erfassungseinheit spezifisch dazu konfiguriert ist, Nutzungszustandsinformationen der Anzahl von über Bluetooth zugreifenden Benutzern des Endgeräts zu erfassen; und
die Detektionseinheit spezifisch dazu konfiguriert ist, zu bestimmen, dass das Endgerät anormal eingeschaltet wird, wenn die Nutzungszustandsinformationen der Anzahl von über Bluetooth zugreifenden Benutzern angeben, dass kein Bluetooth-Benutzer auf das Endgerät zugreift.

11. Vorrichtung nach einem der Ansprüche 8 bis 10, wobei:
die Erfassungseinheit spezifisch dazu konfiguriert ist, Nutzungszustandsinformationen einer USB-Schnittstelle des Endgeräts zu erfassen; und
die Detektionseinheit spezifisch dazu konfiguriert ist, zu bestimmen, dass das Endgerät anormal eingeschaltet wird, wenn die Nutzungszustandsinformationen der USB-Schnittstelle angeben, dass keine Einrichtung mit der USB-Schnittstelle des Endgeräts verbunden ist.

12. Vorrichtung nach einem der Ansprüche 8 bis 11, wobei:
die Erfassungseinheit spezifisch dazu konfiguriert ist, Nutzungszustandsinformationen eines Ladegeräts des Endgeräts zu erfassen; und
die Detektionseinheit spezifisch dazu konfiguriert ist, zu bestimmen, dass das Endgerät anormal eingeschaltet wird, wenn die Nutzungszustandsinformationen des Ladegeräts angeben, dass kein Ladegerät mit einer Ladegerät-Schnittstelle des Endgeräts verbunden ist.

13. Vorrichtung nach einem der Ansprüche 8 bis 12, ferner umfassend:
eine Timing-Einheit, die dazu konfiguriert ist, einen Timer zu starten, bevor die Erfassungseinheit die Nutzungszustandsinformationen des Endgeräts erfasst;
die Steuereinheit ist spezifisch dazu konfiguriert, das Endgerät zu steuern, so dass es sich abschaltet, nachdem der durch die Timing-Einheit gestartete Timer einen voreingestellten Timing-Zeitraum erreicht; und
die Timing-Einheit ist ferner dazu konfiguriert, den Timer anzuhalten, wenn die Detektionseinheit bestimmt, dass das Endgerät nicht anormal eingeschaltet wird.

14. Computerprogrammprodukt, das Computerprogrammcode umfasst, der, wenn er durch eine Computereinheit ausgeführt wird, bewirkt, dass die Computereinheit alle Schritte der Ansprüche 1 bis 7 durchführt.

## Revendications

1. Procédé pour commander la mise hors tension d'un terminal, comprenant les étapes suivantes :
acquérir (101) des informations d'état d'utilisation du terminal après la mise sous tension du terminal ; et
commander (102) la mise hors tension du terminal s'il est déterminé, conformément à des informations d'état d'utilisation du terminal, que le terminal est anormalement mis sous tension en raison d'un déclenchement accidentel d'un interrupteur d'alimentation, où les informations d'état d'utilisation comprennent au moins un type d'informations parmi les suivants : des informations d'état d'utilisation du nombre d'utilisateurs « fidélité sans fil », Wi-Fi, utilisées pour identifier s'il y a un accès d'utilisateur par Wi-Fi, des informations d'état d'utilisation du nombre d'utilisateurs accédant via Bluetooth utilisées pour identifier s'il y a un accès d'utilisateur par Bluetooth, des informations d'état d'utilisation d'interface USB utilisées pour identifier si un dispositif est connecté à une interface USB du terminal et des informations d'état d'utilisation du chargeur utilisées pour identifier si un chargeur est connecté à une interface de chargeur du terminal.

2. Procédé selon la revendication 1, dans lequel :
les informations d'état d'utilisation du terminal comprennent des informations d'état d'utilisation du nombre d'utilisateurs « fidélité sans fil », Wi-Fi ; et
la détermination, conformément à des informations d'état d'utilisation acquises du terminal, que le terminal est anormalement mis sous tension comprend l'étape suivante :
déterminer que le terminal est anormalement mis sous tension si les informations d'état d'utilisation du nombre d'utilisateurs Wi-Fi indiquent qu'aucun utilisateur Wi-Fi n'accède au terminal.

3. Procédé selon l'une quelconque des revendications 1 à 2, dans lequel :
les informations d'état d'utilisation du terminal comprennent des informations d'état d'utilisation du nombre d'utilisateurs accédant via Bluetooth ; et
la détermination, conformément à des informations d'état d'utilisation acquises du terminal, que le terminal est anormalement mis sous tension comprend l'étape suivante :
déterminer que le terminal est anormalement mis sous tension si les informations d'état d'utilisation du nombre d'utilisateurs accédant via Bluetooth indiquent qu'aucun utilisateur Bluetooth n'accède au terminal.

4. Procédé selon l'une quelconque des revendications 1 à 3, dans lequel :
les informations d'état d'utilisation du terminal comprennent des informations d'état d'utilisation d'une interface de bus série universel, USB ; et
la détermination, conformément à des informations d'état d'utilisation acquises du terminal, que le terminal est anormalement mis sous tension comprend l'étape suivante :
déterminer que le terminal est anormalement mis sous tension si les informations d'état d'utilisation de l'interface USB indiquent qu'aucun dispositif n'est connecté à l'interface USB du terminal.

5. Procédé selon l'une quelconque des revendications 1 à 4, dans lequel :
les informations d'état d'utilisation du terminal comprennent des informations d'état d'utilisation d'un chargeur ; et
la détermination, conformément à des informations d'état d'utilisation acquises du terminal, que le terminal est anormalement mis sous tension comprend l'étape suivante :
déterminer que le terminal est anormalement mis sous tension si les informations d'état d'utilisation du chargeur indiquent qu'aucun chargeur n'est connecté à une interface de chargeur du terminal.

6. Procédé selon l'une quelconque des revendications 1 à 5, comprenant en outre de démarrer un minuteur après que le terminal a été mis sous tension et avant d'acquérir les informations d'état d'utilisation du terminal, où :
spécifiquement, commander le terminal pour qu'il s'éteigne comprend de commander la mise hors tension du terminal après que le minuteur a atteint un temps prédéfini.

7. Procédé selon la revendication 6, dans lequel le minuteur est arrêté s'il est déterminé, conformément aux informations d'état d'utilisation acquises du terminal, que le terminal n'est pas anormalement mis sous tension.

8. Appareil pour commander la mise hors tension d'un terminal, comprenant :
une unité d'acquisition (501), configurée pour acquérir des informations d'état d'utilisation du terminal après la mise sous tension du terminal ;
une unité de détection (502), configurée pour déterminer, conformément aux informations d'état d'utilisation du terminal acquises par l'unité d'acquisition, que le terminal est anormalement mis sous tension en raison d'un déclenchement accidentel d'un interrupteur d'alimentation ; et
une unité de commande (503), configurée pour commander la mise hors tension du terminal lorsque l'unité de détection détermine que le terminal est anormalement mis sous tension, où les informations d'état d'utilisation comprennent au moins un type d'informations parmi les suivants : des informations d'état d'utilisation du nombre d'utilisateurs Wi-Fi, utilisées pour identifier s'il y a un accès d'utilisateur par Wi-Fi, des informations d'état d'utilisation du nombre d'utilisateurs accédant via Bluetooth, utilisées pour identifier s'il y a un accès d'utilisateur par Bluetooth, des informations d'état d'utilisation d'interface USB, utilisées pour identifier si un dispositif est connecté à une interface USB du terminal et des informations d'état d'utilisation du chargeur, utilisées pour identifier si un chargeur est connecté à une interface de chargeur du terminal.

9. Appareil selon la revendication 8, dans lequel :
l'unité d'acquisition est spécifiquement configurée pour acquérir des informations d'état d'utilisation du nombre d'utilisateurs Wi-Fi du terminal ; et
l'unité de détection est spécifiquement configurée pour déterminer que le terminal est anormalement mis sous tension lorsque les informations d'état d'utilisation du nombre d'utilisateurs Wi-Fi indiquent qu'aucun utilisateur Wi-Fi n'accède au terminal.

10. Appareil selon l'une quelconque des revendications 8 à 9, dans lequel :
l'unité d'acquisition est spécifiquement configurée pour acquérir des informations d'état d'utilisation du nombre d'utilisateurs accédant via Bluetooth au terminal ; et
l'unité de détection est spécifiquement configurée pour déterminer que le terminal est anormalement mis sous tension lorsque les informations d'état d'utilisation du nombre d'utilisateurs accédant via Bluetooth indiquent qu'aucun utilisateur Bluetooth n'accède au terminal.

11. Appareil selon l'une quelconque des revendications 8 à 10, dans lequel :
l'unité d'acquisition est spécifiquement configurée pour acquérir des informations d'état d'utilisation d'une interface USB du terminal ; et
l'unité de détection est spécifiquement configurée pour déterminer que le terminal est anormalement mis sous tension lorsque les informations d'état d'utilisation de l'interface USB indiquent qu'aucun dispositif n'est connecté à l'interface USB du terminal.

12. Appareil selon l'une quelconque des revendications 8 à 11, dans lequel :
l'unité d'acquisition est spécifiquement configurée pour acquérir des informations d'état d'utilisation d'un chargeur du terminal ; et
l'unité de détection est spécifiquement configurée pour déterminer que le terminal est anormalement mis sous tension lorsque les informations d'état d'utilisation du chargeur indiquent qu'aucun chargeur n'est connecté à une interface de chargeur du terminal.

13. Appareil selon l'une quelconque des revendications 8 à 12, comprenant en outre :
une unité de minuteur, configurée pour démarrer un minuteur avant que l'unité d'acquisition acquière les informations d'état d'utilisation du terminal ;
l'unité de commande étant spécifiquement configurée pour commander la mise hors tension du terminal après que le minuteur démarré par l'unité de minuteur a atteint un temps prédéfini ; et
l'unité de minuteur est en outre configurée pour arrêter le minuteur lorsque l'unité de détection détermine que le terminal n'est plus anormalement mis sous tension.

14. Produit programme informatique, comprenant un code de programme informatique qui, lorsqu'il est exécuté par une unité informatique, amènera l'unité informatique à exécuter toutes les étapes des revendications 1 à 7.
